# EUROPÄISCHE PATENTSCHRIFT

(11) **EP 1 203 036 B1**
(45) Veröffentlichungstag und Bekanntmachung des Hinweises auf die Patenterteilung: **23.11.2005**
(21) Anmeldenummer: 00951372.2
(22) Anmeldetag: 12.07.2000
(51) Int. Cl.: C08G 18/08, B01J 19/26, B01F 5/06

(54) **VERSTELLBARER STRAHLDISPERGATOR ZUR HERSTELLUNG WÄSSRIGER 2-KOMPONENTEN-POLYURETHANLACK-EMULSIONEN**
ADJUSTABLE JET DISPERSER FOR PRODUCING AQUEOUS TWO-COMPONENT POLYURETHANNE PAINT EMULSIONS
DISPERSEUR A JET REGLABLE POUR LA PRODUCTION D'EMULSIONS AQUEUSES DE PEINTURES DE POLYURETHANNE A DEUX COMPOSANTS

(30) Priorität: 16.07.1999 DE 19933441
(43) Veröffentlichungstag der Anmeldung: 08.05.2002
(73) Patentinhaber: Bayer MaterialScience AG, 51368 Leverkusen (DE)
(72) Erfinder: KLINKSIEK, Bernd, D-51429 Bergisch Gladbach (DE); SCHLEENSTEIN, Dieter, D-51519 Odenthal (DE); HOVESTADT, Wieland, D-42799 Leichlingen (DE); VOM FELDE, Michael, D-40764 Langenfeld (DE)
(86) Internationale Anmeldenummer: PCT/EP2000/006599
(87) Internationale Veröffentlichungsnummer: WO 2001/005860

(56) Entgegenhaltungen:
- EP-A- 0 685 544
- US-A- 3 437 624

## Beschreibung

Die Erfindung betrifft ein Verfahren zur Herstellung wäßriger Zweikomponenten-Polyurethan-Lackemulsionen mit variablem Durchsatz und deren Verwendung als hochwertige Lacke und Beschichtungen.

2-Komponenten-Polyurethanlacke (2K-PUR-Lacke) werden aufgrund der nur begrenzten Verarbeitungszeit (Topfzeit) der Lacke erst kurz vor der Applikation vermischt. Je nach Reaktivität der Lacksysteme kann diese Topfzeit mehrere Minuten bis Stunden betragen.

Während solche Zweikomponenten-Systeme in der Vergangenheit in organischen Lösungsmitteln gelöst eingesetzt wurden, sind in neuerer Zeit eine Vielzahl von wasserdispergierbaren Zweikomponenten-Systemen entwickelt worden. Die wasserdispergierbaren Zweikomponenten-Systeme bestehen regelmäßig aus einer Hydroxylgruppen aufweisenden Harzkomponente (Binder, Polyol) und einer Polyisocyanatkomponente (Härter, Vernetzer). Dabei liegt die hydroxyfunktionelle Harzkomponente in der Regel als wäßrige Dispersion, die Polyisocyanatkomponente als wasserfreie hundertprozentige Komponente oder in einem Lösemittel gelöst vor. Solche, auch im Rahmen der vorliegenden Erfindung einsetzbaren Systeme, sind z.B. in den EP-A 358 979, 496 205, 469 389, 520 266, 540 985, 542 105, 543 228, 548 669, 562 282 und 583 728 offenbart. Nachteilig an diesen Lacksystemen ist, daß die von den Zweikomponenten-Systeme auf Basis rein organischer Lösungsmittel bekannte Lackqualität in einigen Anwendungsbereichen noch nicht erreicht wird. Dieses gilt vor allem für Anwendungsbereiche, in denen besonders hohe optische Eigenschaften und Beständigkeitseigenschaften gefordert werden.

Bekannt ist, zur Erzielung hoch qualitativer Lackoberflächen Lackdispersionen mit möglichst kleiner Teilchengröße einzusetzen. In wäßrigen Zweikomponenten-Polyurethan-Lacken werden daher in der Regel Polyoldispersionen mit hinreichend kleiner Teilchengröße von unter 500 nm, bevorzugt 10 - 200 nm, eingesetzt. Die Dispergierung der an sich hydrophoben Isocyanatkomponente erfolgt erst kurz vor der Applikation der Lacke, da die Polyisocyanatkomponente mit Wasser reagiert und daher nur eine begrenzte Lagerstabilität in Gegenwart von Wasser aufweist. Die Dispergierung der an sich hydrophoben Polyisocyanatkomponente in der wäßrigen hydroxyfnktionellen Harzdispersion durch übliche statische Mischvorrichtungen bereitet aber erhebliche Schwierigkeiten. Der Grund ist darin zu sehen, daß die Isocyanatkomponente bereits während der Emulgierung auf der Oberfläche bereits gebildeter Emulsionsteilchen stabilisiert wird, so daß die oberflächliche Stabilisierungsschicht einer weiteren Zerteilung entgegensteht. Wäßrige Zweikomponenten-Polyurethan-Lackemulsionen weisen daher regelmäßig eine bimodale Teilchengrößenverteilung auf mit einem ersten Verteilungsmaximum einer Teilchengröße, die der hydroxyfunktionellen Harzdispersion entspricht und einem zweiten Verteilungsmaximum mit einer Teilchengröße von oberhalb 10 000 nm (Isocyanatkomponente), wobei noch erhebliche Anteile mit Teilchengrößen von oberhalb 20 000 nm vorhanden sind.

Es wurden auch bereits durch chemische Modifizierung hydrophilierte Polyisocyanate und externe Emulgatoren enthaltende Polyisocyanate entwickelt, die zwar eine deutlich einfachere Dispergierung mit statischen Mischvorrichtungen auf eine mittlere Teilchengröße von unter 1 000 nm ermöglicht, jedoch ausgehärtete Lackfilme mit für viele Anwendungsbereiche unzureichenden Beständigkeitseigenschaften ergeben. Lackfilme mit guten Beständigkeitseigenschaften werden dagegen nur durch Einsatz hydrophober Polyisocyanatkomponenten erhalten.

Aufgrund der Vorstellung, daß die Dispergierbarkeit der Isocyanatkomponente durch die Stabilisierungsreaktion, die auf der Oberfläche bereits vorhandener Teilchen stattfindet, begrenzt wird, wurde nach Möglichkeiten gesucht, eine möglichst feinteilige Dispergierung innerhalb so kurzer Zeiträume zu erzielen, innerhalb derer eine merkliche Oberflächenstabilisierung noch nicht stattfindet. Insbesondere sollte während der Dispergierung auch eine die Reaktion der Polyisocyanatkomponente mit Wasser beschleunigende Erwärmung vermieden werden.

In der DE-A 19 510 651 wird beschrieben, daß nach Vorvermischung der hydroxyfunktionellen Bindemitteldispersion der Polyisocyanatkomponente, Wasser, gegebenenfalls zusätzlichem Lösungsmittel, sowie gegebenenfalls weiteren an sich bekannten Lackhilfsmitteln, die erhaltene Voremulsion, an die keine besonderen Anforderungen zu stellen sind, unter hohem Druck durch eine Düse mit geringer Abmessung in mindestens einer Dimension gedrückt wird. Als Homogenisierdüsen sind Spaltdüsen, Ringschlitzdüsen oder Lochdüsen erwähnt. Besonders bevorzugt wird ein Strahldispergator gemäß EP-A-101 007 eingesetzt, da bereits bei relativ geringen Drücken sehr feinteilige Dispersionen entstehen. Der anzuwendende Druck soll 1 bis 30 MPa (10 bis 300 Atmosphären), im Falle des Strahldispergators vorzugsweise 1 bis 8 MPa, besonders bevorzugt 2 bis 6 MPa betragen. Mittels dieser Emulgierung gelingt es, über mehrere Stunden stabile Zweikomponenten-Polyurethan-Lackemulsionen herzustellen, die nach Applikation und Aushärtung eine erheblich verbesserte Oberflächenqualität zeigen.

Ferner ist es möglich, den Gehalt an Lösungsmittel in der Dispersion erheblich zu reduzieren und bevorzugt auf eine Hydrophilierung der Polyisocyanatkomponente zu verzichten. Insbesondere können erfindungsgemäß Dispersionen mit einem Lösungsmittelgehalt von unter 15 % ohne weiteres hergestellt werden. In Abhängigkeit von dem bei der Dispergierung angewandten Druck, der Anzahl der Düsendurchgänge und dem eingesetzten Zweikomponenten-System ist es ferner möglich, auch völlig Lösungsmittel- und Hydrophilierungsmittel-freie Emulsionen herzustellen.

Die mit dem erfindungsgemäßen Verfahren erzielbaren hohen Oberflächenqualitäten der Lackierungen können unmittelbar der Teilchengrößenverteilung der Emulsionen zugeordnet werden.

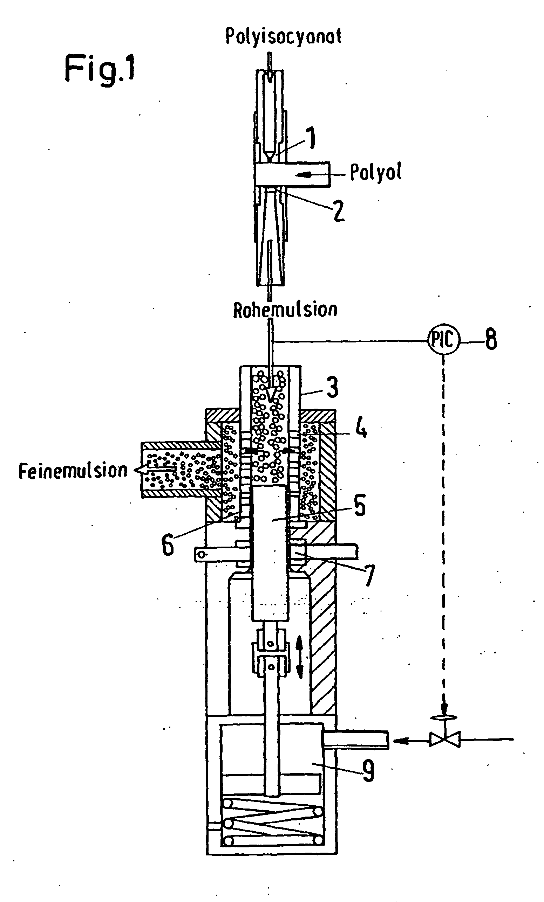

In der DE-A 19 510 651 ist die Anwendung des Strahldispergators mit festen Abmessungen in den Figuren 1, 2, 3, 4 und 5 beschrieben. In der Fig. 6 ist eine spezielle Form beschrieben, wobei die Bohrungen durch ein verschiebbares Einsatzrohr freigegeben oder versetzt werden. Für die Anwendung hat sich diese Form nicht praktikabel gezeigt. Es wurde gefunden, daß solche Homogenisierdüsen sehr schnell in Bruchteilen von Sekunden verstellbar sein müssen, um bei schwankenden Absatzmengen kontinuierlich gleiche Emulsionsqualität zu erzeugen.

EP-A 685 544 beschreibt ein Verfahren zur Herstellung wässriger Zweikomponenten-Polyurethan-Lackemulsionen auf Basis von isocyanatreaktiven Bindemitteldispersionen und Polyisocyanaten durch Vermischen der beiden Komponenten bei einem Druck von 1-30 MPa in einem Strahldispergator.

Es wurde gefunden, daß sich z.B. Automobilkarossen besonders vorteilhaft mit höchster Qualität lackieren lassen, wenn die Emulgierung des Polyisocyanates in der wässrigen Polyolkomponente kontinuierlich unmittelbar vor Einleitung in die Spritzpistole oder Zerstäuberglocke erfolgt. Probleme bereitet es jedoch, wenn die Abnahmemenge des Lackes bedingt durch die Geometrie der Aulokarosse in sehr kurzen Zeitabständen schwankt.

Die Aufgabe der Erfindung bestand also darin, eine Mischapparatur für wässrige Zweikomponenten-Polyurethanlacke mit hoher Lackqualität zur Verfügung zu stellen, die bei schwankenden Absatzmengen kontinuierlich gleiche Emulsionsqualitäten erzeugt.

Diese Aufgabe konnte überraschenderweise durch die nachfolgend näher beschriebene Ausführungsform eines Strahldispergators gelöst werden.

Gegenstand der Erfindung ist ein Verfahren zur Herstellung wäßriger Zweikomponenten-Polyurethan-Lackemulsionen mit variablem Durchsatz auf Basis Isocyanat-reaktive Gruppen aufweisender wässriger Bindemitteldispersionen und Polyisocyanate durch Vermischen der beiden Komponenten, unter einem Druck von 1 bis 30 MPa mittels eines verstellbaren Strahldispergators mit zu- oder abschaltbaren Düsenbohrungen oder Schlitzen, wobei der Strahldispergator eine Hülse mit einer Vielzahl von axial in wenigstens zwei Reihen angeordneten Düsenbohnmgen oder mit einem oder mehreren axial angeordneten Schlitzen und einen in der Hülse mittels eines elektrischen oder pneumatischen Antriebes verschiebbar angeordneten Kolben aufweist, wobei der Kolben in Abhängigkeit von seiner Stellung in der Hülse eine bestimmte Zahl der Bohrungen oder die Schlitze für den Durchgang des Stromes von Dispergiergut teilweise oder vollständig absperrt, dadurch gekennzeichnet, dass die Hülse und der Kolben aus Keramik bestehen.

Erfindungsgemäß wird unmittelbar vor dem Strahldispergator (Abb. 1) vorteilhaft eine Mischdüse (1) für das Polyisocyanat geschaltet und durch Eindüsen in die Polyolkomponente die Rohemulsion erzeugt. Unmittelbar nachgeschaltet ist eine weitere Blende (2), die eine schon gute Qualität der Rohemulsion gewährleistet und Grobanteile verhindert.

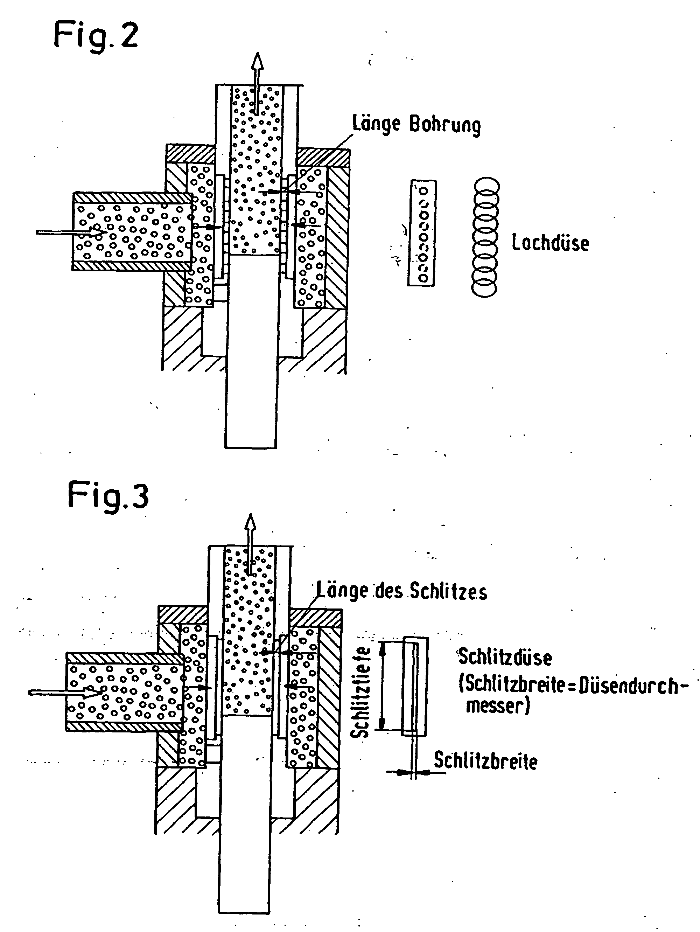

Kernstück der erfindungsgemäßen Vorrichtung ist eine Keramikhülse (3) mit den Homogenisierbohrungen (4) und dem Keramikkolben (5). Es wurde gefunden, daß die Keramikbauteile sehr passgenau eingeschliffen sein müssen, um einen Leckstrom zwischen Kolben und Hülse zu vermeiden. Es wurde gefunden, daß Bauteile aus Stahl keinen dichten Abschluß und so das Zuschalten einzelner Bohrungen ermöglichen. Es wurde ferner gefunden, daß die Bohrungen an der Eintrittsseite sehr scharfkantig geschliffen sein sollten. Als Keramikmaterialien empfehlen sich Metalloxide wie z.B. Zirkonoxid oder noch härtere Materialien. Als vorteilhaft hat sich ferner eine Spülbohrung (6) erwiesen, die beim Spülen einen großen Mengenstrom ermöglicht. Die Keramikhülse kann sowohl von Innen nach Außen, als auch von Außen nach Innen durchströmt werden. Um einen Lackfilm am Kolben beim Stillstand zu vermeiden, kann eine Spüllaterne (7) installiert werden. Durch Druckregelung (8) z.B. über einen Pneümatikantrieb (9) ist in Bruchteilen einer Sekunde die Verstellung möglich, um soviel Düsen zu- oder abzuschalten, daß immer der gleiche Homogenisierdruck und damit die gleiche Emulsionsqualität sichergestellt ist. Werden elektrische Schrittmotoren verwendet, ist auch eine Verstellung im ms-Bereich möglich. Eine annähernd stufenfreie Verstellung wird entsprechend Abb. 2 erreicht, wenn zwei Düsenreihen versetzt gegenüberstehen.

Als besonders vorteilhaft wurde gefunden, wenn entsprechend Abb. 3 statt der Düsen Schlitze verwendet werden. Es wurde gefunden, daß wenn man die Schlitze nur so breit macht, wie den Bohrungsdurchmesser oder noch kleiner, eine sehr konstante Fahrweise und lineare, vollkommen stufenfreie Verstellung ermöglicht. Mit der erfindungsgemäßen Vorrichtung lassen sich 2-Komponenten-Polyurethan-Lacke höchster Qualität und mit einem großen Regelbereich herstellen.

Die Geometrie der Bohrungen und Schlitze soll so dimensioniert sein, daß Energiedichten von 10⁵ - 10⁷ W/cm³, bevorzugt 10⁶ - 10⁷ W/cm³, erreicht werden. Erreicht wird dies, wenn nach Abbildung 2 und 3 im Bereich der Bohrung oder des Schlitzes soviel Material abgetragen wird, daß die Länge der Bohrung 1 bis 3 mal so lang ist, wie der Durchmesser der Bohrung beziehungsweise die Breite des Schlitzes. Besonders bevorzugt 1 bis 2 mal so lang.

Der entwickelte Strahldispergator hat zusätzlich den Vorteil, daß ein Zwischenpuffer und damit der Spülaufwand bei Linienstillstand minimiert werden kann, wenn die Emulgierung des Polyisocyanats kontinuierlich unmittelbar vor Einleitung in die Spritzpistole oder Zerstäuberglocke erfolgt.

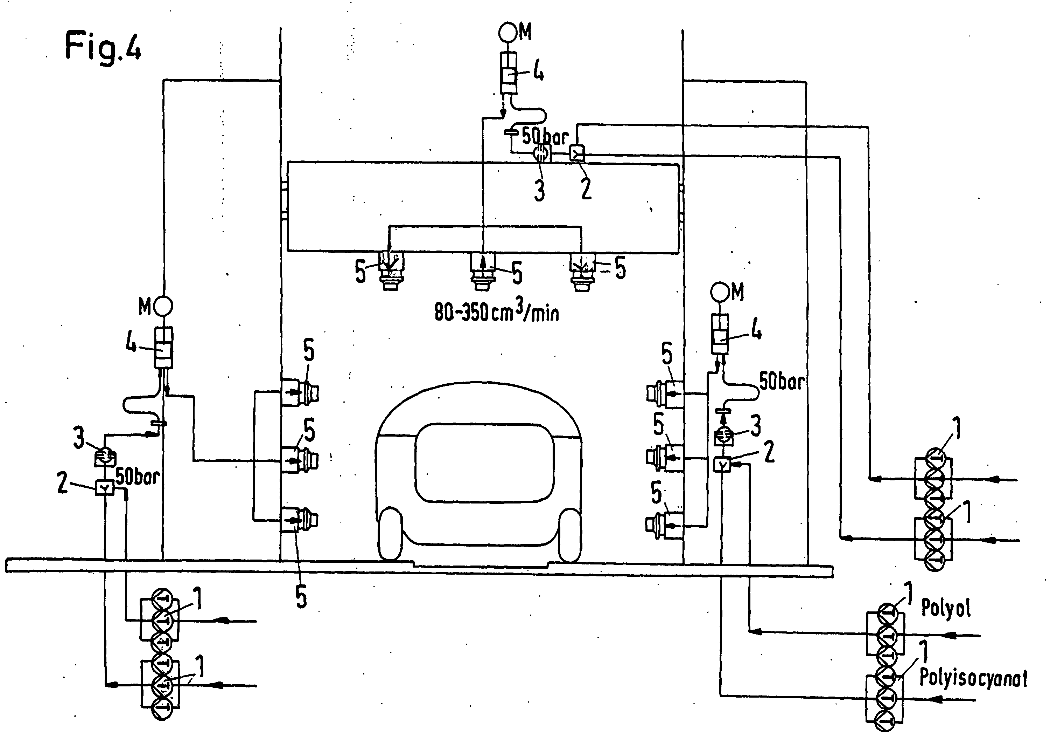

Abb. 4 zeigt die erfindungsgemäße Ausführungsform beispielhaft zur Autoerstlackierung. Über eine oder mehrere Dosierpumpen (1) werden Polyol und Polyisocyanat kontinuierlich und pulsationsfrei zur Mischdüse (2) und dem verstellbaren Strahldispergator (3) gepumpt. Die Dosierpumpen haben ferner die Aufgabe den notwendigen Pumpendruck aufzubringen. Nach der Emulsionsherstellung kann der 2-Komponentenlack noch über einen kleinen Puffer (4) für mehrere Zerstäubungsglocken (5) gespeichert werden, wenn der Lack mit elektrischer Innenaufladung zerstäubt werden soll. Bei der elektrischen Außenaufladung kann auf die Puffer verzichtet werden.

Nach dem erfindungsgemäßen Verfahren können z.B. bimodale wäßrige 2 Komponenten-Polyurethan-Lackemulsionen auf Basis hydroxyfunktioneller Harzdispersionen und Polyisocyanaten, die eine Teilchengrößenverteilung mit einem ersten Verteilungsmaximum bei einer Teilchengröße von <500 nm, bevorzugt 10 bis 200 nm und einem zweiten Verteilungsmaximum bei einer Teilchengröße von 200 bis 2 000 nm aufweisen, hergestellt werden. Bevorzugt liegt das zweite Verteilungsmaximum bei einer Teilchengröße von 300 bis 1 000 nm. Die Teilchengrößen der Verteilungsmaxima unterscheiden sich mindestens um einen Faktor 2.

Insbesondere weisen 99 Gew.% der Teilchen der erfindungsgemäßen Emulsion eine Teilchengröße von unter 5 000 nm, bevorzugt unter 1 000 nm auf.

Erfindungsgemäß können alle auch bisher schon für Zweikomponenten-Polyurethan-Lacke eingesetzten Bindemittel und Vernetzerkomponenten eingesetzt werden.

Geeignete Bindemittelharze sind z.B. Isocyanat-reaktive Gruppen aufweisende Polyacrylate, Polyester, Urethan-modifizierte Polyester, Polyether, Polycarbonate oder Polyurethane, inbesondere solche des Molekulargewichtsbereiches 1 000 bis 10 000 g/mol. Als Isocyanat-reaktive Gruppen werden bevorzugt Hydroxylgruppen eingesetzt. Die Bindemittelharze werden in der Regel als wässrige Dispersionen eingesetzt.

Als Polyisocyanatkomponente sind beliebige organische Polyisocyanate mit aliphatisch, cycloaliphatisch, araliphatisch und/oder aromatisch gebundenen, freien Isocyanatgruppen, geeignet. Die Polyisocyanatkomponente sollte im allgemeinen eine Viskosität von 20 bis 1 000 mPa.s, vorzugsweise von unterhalb 500 mPa.s, aufweisen. Jedoch können auch höherviskose Polyisocyanate eingesetzt werden, wenn die Viskosität der Polyisocyanatkomponente durch einen entsprechenden Lösungsmittelgehalt herabgesetzt ist.

Besonders bevorzugt werden als Polyisocyanate solche mit ausschließlich aliphatisch und/oder cycloaliphatisch gebundenen Isocyanatgruppen mit einer zwischen 2,2 und 5,0 liegenden mittleren NCO-Funktionalität und einer Viskosität von 50 bis 500 mPa.s bei 23°C eingesetzt. Bei entsprechend niedriger Viskosität gelingt erfindungsgemäß eine Dispergierung mit hinreichend kleiner Teilchengröße völlig ohne Lösungsmittelzusatz.

Ferner können die in der Lackchemie bekannten üblichen Zusatz- und Modifizierungsmittel eingesetzt werden.

Das erfindungsgemäße Verfahren ist nicht an den Einsatz speziell für wasserdispergierbare Lacksysteme entwickelte Komponentensysteme, wie beispielhaft in der eingangs zitierten Literatur beschrieben, gebunden. Vielmehr ist es erfindungsgemäß möglich, eine Vielzahl der bisher nicht wasserdispergierbaren Zweikomponenten-Systeme einzusetzen. Jedoch wird im allgemeinen bei erfindungsgemäßem Einsatz von speziell für die Dispergierung in Wasser entwickelten Zweikomponenten-Systemen der Dispergieraufwand im Rahmen der vorliegenden Erfindung (d.h. der anzuwendende Druck) besonders günstig sein.

Die beim erfindungsgemäßen Verfahren erhaltenen Emulsionen eignen sich zur Herstellung von hochwertigen Überzügen auf den verschiedensten Substraten und Materialien wie Holz, Metallen, Kunststoffen usw. Vorzugsweise werden die Beschichtungssysteme zur Lackierung von Karosserien oder Karosserieteilen in der Autoerstlackierung eingesetzt.

### Beispiele

### Beispiel 1

Kontinuierliche Herstellung einer Paraffinölemulsion folgender Rezeptur:
4 Teile Paraffinöl dünnflüssig
1 Teil Emulgator, Tween 80/Arlacel 80-Gemisch, HLB 11,5 und
5 Teile Wasser

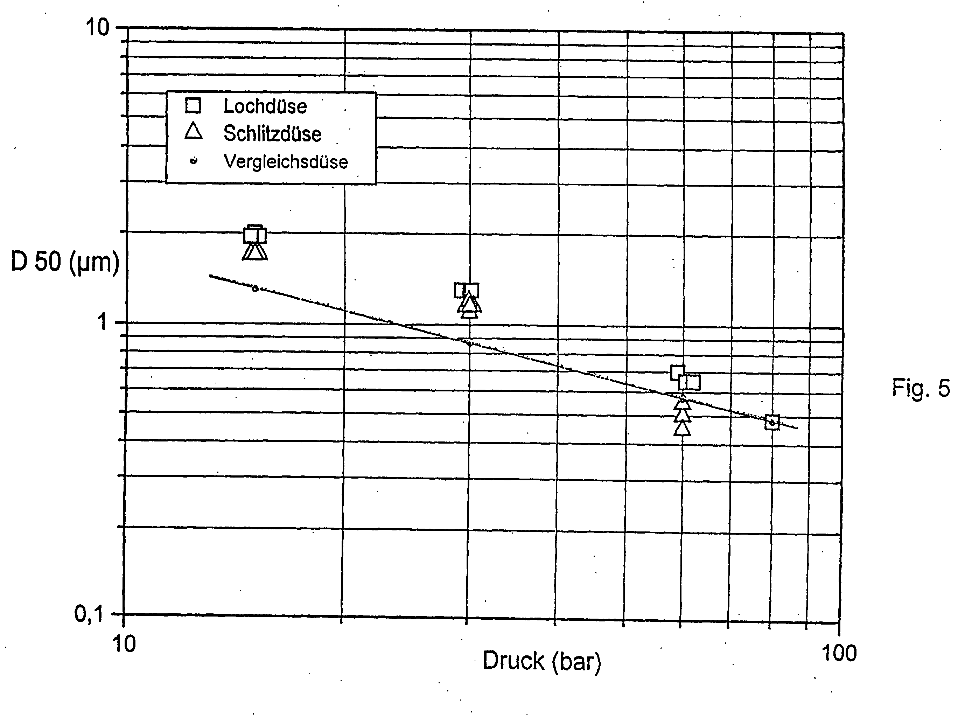

In der Abb. 5 sind graphisch die Versuchsergebnisse mit einer verstellbaren Lochdüse nach Abb. 2 mit 10 Löchern ä 0,1 mm, mit einer 0,1 mm breiten Schlitzdüse einer Tiefe von 6 mm und ein Strahldispergator mit festen Abmessungen und mit 2 Bohrungen à 0,1 mm verglichen.

Von den verstellbaren Düsen sind jeweils die kleinsten Öffnungen, eine mittlere Einstellung und die maximale Öffnung aufgezeichnet. Die Graphik, die die mittlere Teilchengröße als Funktion vom Homogenisierdruck angibt, zeigt eine gute Übereinstimmung über den gesamten Bereich und die gute Funktionsweise des verstellbaren Strahldispergators.

### Beispiel 2

Kontinuierliche Herstellung eines 2-Komponenten-Polyurethanlackes nach folgender Rezeptur:

| **Bindemittelkomponente:** | |
|---|---|
| Bayhydrol® VP LS 2271 (hydroxyfunktionelle Polyacrylatdispersion, Bayer AG) | 30,39 % |
| Bayhydrol® VP LS 2231 (hydroxyfunktionelle, urethanmodifizierte Polyesterdispersion, Bayer AG) | 33,28 % |
| Byk® 345 Lackhilfsmittel, Byk Chemie GmbH | 0,29 % |
| Byk® 333 Lackhilfsmittel, Byk Chemie GmbH | 0,30 % |
| destilliertes Wasser | 7,65 % |

| **Härterkomponente:** | |
|---|---|
| Desmodur® VP LS 2025/1 (Lackpolyisocyanat, Bayer AG) | 18,29 % |
| Tinuvin® 1130, 50 % in Butyldiglykolacetat . (Lichtschutzmittel, Ciba Spezialitätenchemie GmbH) | 1,85 % |
| Tinuvin® 292, 50 % in Butyldiglykolacetat (HALS-Stabilisator, Ciba Spezialitätenchemie GmbH) | 0,92 % |
| Butyldiglykolacetat / Solvesso 100 (1/1) | 7,03 % |
| | 100,00 % |

Die beiden Komponenten werden nach Abb. 4 mit einem verstellbaren Strahldispergator nasch Abb. 1 mit 0,2 mm großen Lochdüsen nach Abb. 2 vermischt und die Härterkomponente emulgiert.

Die Applikation erfolgt elektrostatisch über eine handelsübliche Glocke auf verzinkte Stahlbleche mit einer Schichtstärke von 40 µm. Der Lack-film wird 5 Minuten bei Raumtemperatur abgelüftet, 10 Minuten bei 80°C vorgetrocknet und 30 Minuten bei 130°C ausgehärtet. Der Lackfilm hat die folgenden anwendungstechnischen Eigenschaften:

| | |
|---|---|
| Pendelhärte nach König (23°C) | 190 s |
| Glanz 20° | 88 |
| Lösemittelbeständigkeit Xylol/Treibstoff (0 = sehr gut, 5 = schlecht) | 0/1 |
| Chemikalienbeständigkeit Pankreatin/Schwefelsäure/Natronlauge | 2/1/0 |
| Kratzfestigkeit (Amtec Kistler Laborwaschstraße, 10 Cyclen), Δ Glanz | 13 |

## Patentansprüche

1. Verfahren zur Herstellung wässriger Zweikomponenten-Polyurethan-Lackemulsionen mit variablem Durchsatz auf Basis Isocyanat-reaktive Gruppen aufweisender wässriger Bindemitteldispersionen und Polyisocyanate durch Vermischen der beiden Komponenten, unter einem Druck von 1 bis 30 MPa mittels eines verstellbaren Strahldispergators mit zu- oder abschaltbaren Düsenbohrungen (4) oder Schlitzen, wobei der Strahldispergator eine Hülse (3) mit einer Vielzahl von axial in wenigstens zwei Reihen angeordneten Düsenbohrungen (4) oder mit einem oder mehreren axial angeordneten Schlitzen und einen in der Hülse (3) mittels eines elektrischen oder pneumatischen Antriebes (9) verschiebbar angeordneten Kolben (5) aufweist, wobei der Kolben (5) in Abhängigkeit von seiner Stellung in der Hülse (3) eine bestimmte Zahl der Bohrungen (4) oder die Schlitze für den Durchgang des Stromes von Dispergiergut teilweise oder vollständig absperrt, **dadurch gekennzeichnet, dass** die Hülse (3) und der Kolben (5) aus Keramik bestehen.

## Claims

1. Process for the production of aqueous two-component polyurethane lacquer emulsions, with variable throughput, based on aqueous binder dispersions containing isocyanate-reactive groups and on polyisocyanates by mixing the two components under a pressure of from 1 to 30 MPa by means of an adjustable jet disperser having nozzle bores (4) or slots which can be connected through or shut off, wherein the jet disperser has a sleeve (3) having a plurality of nozzle bores (4) disposed axially in at least two rows or having one or more axially disposed slots, and a piston (5) which is arranged to be displaceable in the sleeve (3) by means of an electric or pneumatic drive (9), wherein the piston (5), in dependence on its position in the sleeve (3), closes off partially or completely a particular number of bores (4) or the slots for the passage of the stream of material for dispersion, **characterised in that** the sleeve (3) and the piston (5) are made of ceramics.

## Revendications

1. Procédé pour la production à débit variable d'émulsions aqueuses de peintures de polyuréthanne à deux composants, à base de dispersions de liants aqueuses comportant des groupes réactifs avec les isocyanates et de polyisocyanates par mélange de deux composants sous une pression de 1 à 30 MPa, au moyen d'un disperseur à jet réglable avec des trous de buses (4) ou des fentes connectables ou déconnectables, le disperseur à jet comportant une douille (3) avec un grand nombre de trous de buses (4) disposés axialement en au moins deux rangées, ou avec une ou plusieurs fente(s) disposée(s) axialement et un piston (5) disposé de manière à pouvoir être déplacé dans la douille (3) au moyen d'une commande électrique ou pneumatique (9), le piston (5) fermant partiellement ou complètement, en fonction de sa position dans la douille (3), un certain nombre des trous (4) ou les fentes pour le passage du courant de produit dispersant, **caractérisé en ce que** la douille (3) et le piston (5) sont en céramique.
